# EUROPEAN PATENT SPECIFICATION

(11) **EP 3 444 720 B1**
(45) Date of publication and mention of the grant of the patent: **12.02.2020**
(21) Application number: 18185474.6
(22) Date of filing: 25.07.2018
(51) Int. Cl.: G06F 8/65

(54) **PROGRAM, UPDATE METHOD, AND INFORMATION PROCESSING APPARATUS**
PROGRAMM, AKTUALISIERUNGSVERFAHREN UND INFORMATIONSVERARBEITUNGSVORRICHTUNG
PROGRAMME, PROCÉDÉ DE MISE À JOUR ET APPAREIL DE TRAITEMENT D'INFORMATIONS

(30) Priority: 28.07.2017 JP 2017147257
(43) Date of publication of application: 20.02.2019
(73) Proprietor: Ricoh Company, Limited, Tokyo 143-8555 (JP)
(72) Inventor: SAEKI, Yasuaki, Tokyo, 143-8555 (JP)
(74) Representative: SSM Sandmair

(56) References cited:
- EP-A1- 2 546 740
- GB-A- 2 499 003

## Description

### BACKGROUND

### Technical Field

The present invention relates to a program, an update method, and an information processing apparatus.

### Description of the Related Art

An update module called a security patch is sometimes installed to operating systems (OS), applications, etc., for improving security or fixing defects.

For example, JP-2006-018608 describes a technique for automatically determining whether a security related file is to be updated and for automatically prohibiting data transmission/reception to and from other information processing apparatuses or access to the network when the security level is low.

In addition, JP-2007-272396 describes a router that is provided on an internal network such as an intra-company network or a home network and has a capability of detecting the presence or absence of a security hole. This router inspects, for a security hole, a terminal that is provided on the internal network and requests an access to an external network. The terminal identified as having the security hole based on the inspection is prohibited from communicating to the external network. According to such a conventional technique, an access to a security patch applying website is permitted regardless of the presence or absence of the security hole based on the inspection.

For example, a security patch of an OS includes update data. A program called an update service or an OS update service updates an update target program with the update data included in the security patch, to install the security patch. This update service may have a mechanism for accessing a network to check whether the latest version of an update file is present at the time of installing the security patch. For example, an update service for Windows (registered trademark), which is an example of an OS, has a mechanism to access a network to check whether the latest version of the update file is present at the time of installing the security patch. A time from the start to completion of the process of checking the presence of the latest version of the update file varies depending on the state of the network and the like. Sometimes, it takes a long time.

Thus, conventionally, a security patch of an OS is sometimes required to wait for a start of the process of updating an update target program with update data included in the security patch for a long time, until the update service finishes the process of checking the presence of the latest update file.

One embodiment of the present invention is to provide a program capable of shortening a time until a process of updating an update target program with update data is started.

GB 2 499 003 A discloses that a user device has two modems, each connected to a radio, wherein one radio connects to a cellular network and the other connects to a non-cellular network (cf. Abstract). This document further discloses that the radios are implemented as software defined radios, in which the baseband modem is implemented in firmware. Moreover, this document discloses that to update one of the modems, a firmware update is downloaded to the device via one of the modems, and that the modem to be updated is then disabled and the firmware for the modem is updated.

EP 2 546 740 A1 discloses that a communication device includes a first receiving unit configured to receive first metainformation indicating a target update required for a program of the communication device from an update information providing device, the first metainformation including information about a dependency version that is another version of update dependent upon the target update; a determining unit configured to determine whether the dependency version is newer than a device version which is a current version of update of the communication device; a second receiving unit configured to receive second metainformation indicating an update for the dependency version from the update information providing device if the dependency version is newer than the device version; and an update process unit configured to execute the update for the dependency version on the basis of the second metainformation and execute the target update based on the first metainformation after executing the update for the dependency version (cf. Abstract).

### SUMMARY

The present invention provides a computer program product according to claim 1 and an update method according to claim 4. Further embodiments of the present invention are described in the dependent claims.

In one aspect of the present invention, a program causes an information processing apparatus (10, 12) that includes communication control means (80) and update means (70) to function as execution request receiving means (51), disablement requesting means (52), update requesting means (53), and enablement requesting means (52). The control means (80) controls communication to a network (20). The update means (70) updates an update target program with update data. The execution request receiving means (51) receives, from a user, an execution request requesting execution of a process of updating the update target program with the update data. The disablement requesting means (52) causes the communication control means (80) to disable the communication to the network (20), in accordance with the execution request. The update requesting means (53) requests the update means (70) to perform the process of updating the update target program with the update data. The enablement requesting means (52) causes the communication control means (80) to enable the communication to the network (20) after the process of updating the update target program with the update data by the update means (70) is completed.

According to an aspect of the present invention, a time until a process of updating an update target program with update data is started is shortened.

### BRIEF DESCRIPTION OF THE DRAWINGS

A more complete appreciation of the embodiments and many of the attendant advantages and features thereof can be readily obtained and understood from the following detailed description with reference to the accompanying drawings, wherein:
FIG. 1 is a schematic view illustrating an example of a configuration of an information processing system, according to an embodiment of the present invention;
FIG. 2 is a block diagram illustrating an example of a hardware configuration of an electronic whiteboard, according to an embodiment of the present invention;
FIG. 3 is a block diagram illustrating an example of a hardware configuration of a computer, according to an embodiment of the present invention;
FIG. 4 is a block diagram illustrating an example of a functional configuration of the electronic whiteboard, according to an embodiment of the present invention;
FIG. 5 is a sequence diagram illustrating an example of an operation of installing a security patch, according to an embodiment of the present invention;
FIG. 6 is a flowchart illustrating an example of an operation performed by an operating system (OS) updater function unit, according to an embodiment of the present invention;
FIG. 7 is a flowchart illustrating of an example of an operation performed by a communication control unit, according to an embodiment of the present invention;
FIG. 8A is an illustration of an example of a screen notifying a user of suspension of a communication function, according to an embodiment of the present invention, and
FIG. 8B is an illustration of an example of a screen notifying a user of resumption of the communication function, according to an embodiment of the present invention.

The accompanying drawings are intended to depict embodiments of the present invention and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

As used herein, the singular forms "a", "an", and "the" are intended to include the multiple forms as well, unless the context clearly indicates otherwise.

An embodiment of the present invention will be described in detail below, with reference to the drawings.

### First Embodiment:

### System Configuration:

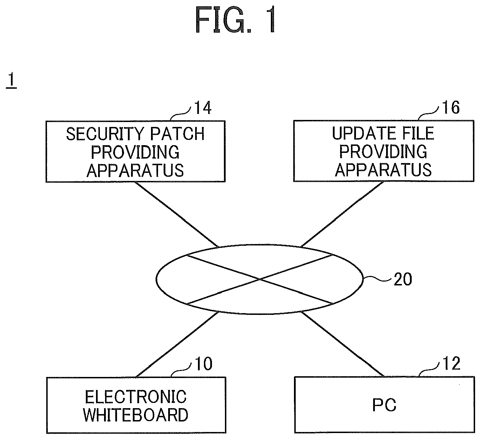

FIG. 1 is a schematic view illustrating an example of a configuration of an information processing system 1 according to the present embodiment. The information processing system 1 of FIG. 1 includes an electronic whiteboard 10, a personal computer (PC) 12, a security patch providing apparatus 14, and an update file providing apparatus 16, which are connected to one another via a network 20 such as the Internet or a local area network (LAN).

The electronic whiteboard 10 is an example of an information processing apparatus in which an operating system (OS) and a device driver are installed. In other words, the electronic whiteboard 10 is an example of an information processing apparatus on which installation of an update module called a security patch is performed for improving security or fixing defects. In the present embodiment, a description is given hereinafter of the electronic whiteboard 10 as an example. In alternative to the electronic whiteboard 10, any suitable electronic device will suffice, provided that it is an information processing apparatus on which installation of a security patch is performed for improving security or fixing defects.

Examples of the electronic device to which the present invention is applicable include an image forming apparatus (a copying machine, a printer, a scanner, a multifunction peripheral), a projector, a videoconference terminal, a game machine, a car navigation system, a digital camera, and a drone.

The electronic whiteboard 10 includes a large-sized display that supports a touch panel system. The electronic whiteboard 10 detects coordinates of positions on a screen touched by such as a user's finger or a stylus, and connects the detected coordinates to display a stroke. In addition, the electronic whiteboard 10 is capable of displaying an image in accordance with data output from a PC that is connected to the electronic whiteboard 10. Further, the electronic whiteboard is capable of communicating with other electronic whiteboard located in a remote site to share the displayed stroke in a synchronous manner. The electronic whiteboard 10 may be referred to as an electronic information board, etc.

In addition to the electronic whiteboard 10, the PC 12 is also an example of an information processing apparatus in which an OS and a device driver are installed. In other words, the PC 12 is an example of an information processing apparatus on which installation of an update module called a security patch is performed for improving security or fixing defects.

In the present embodiment, a description is given hereinafter of the PC 12 as an example. In alternative to the PC 12, any suitable apparatus or device will suffice such as a smartphone, a tablet terminal, or a wearable terminal, provided that it is an information processing apparatus on which installation of a security patch is performed for improving security or fixing defects.

The security patch providing apparatus 14 provides a security patch to the electronic whiteboard 10 and the PC 12 via the network 20. In another example, the electronic whiteboard 10 and the PC 12 acquire the security patch by using a portable auxiliary storage device such as a universal serial bus (USB) memory.

The update file providing apparatus 16 provides an update file to the electronic whiteboard 10 and the PC 12 via the network 20. Further, the update file providing apparatus 16 transmits version information of the latest version of the update file in response to an inquiry for the latest version from the electronic whiteboard 10 and the PC 12.

The information processing system 1 of FIG. 1 is just an example, and there may be various system configurations depending on applications or purposes.

### Hardware Configuration:

### Electronic Whiteboard 10:

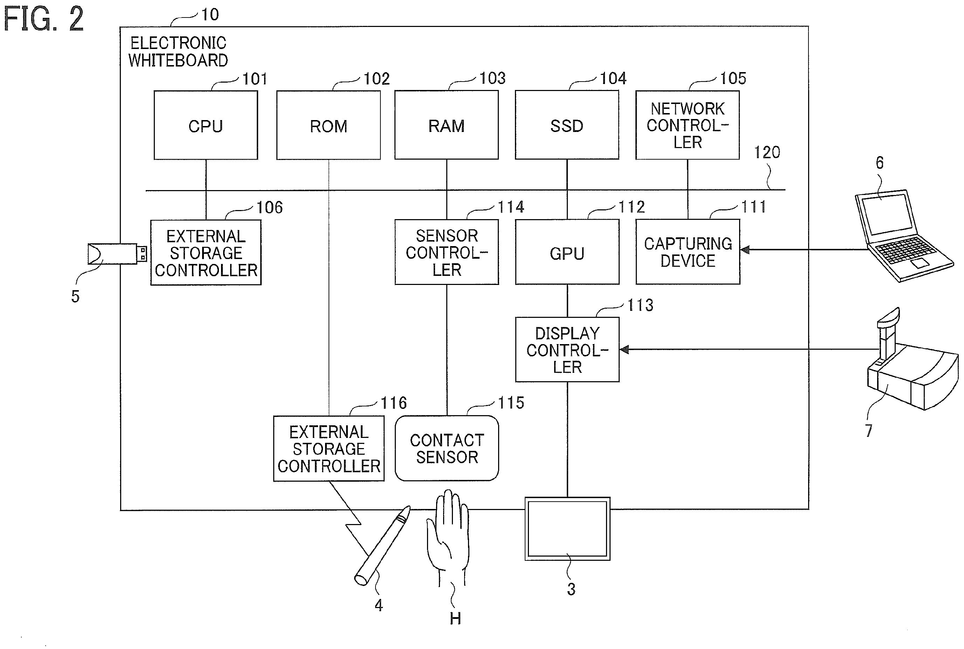

FIG. 2 is a block diagram illustrating an example of a hardware configuration of the electronic whiteboard 10. The electronic whiteboard 10 of FIG. 2 includes a central processing unit (CPU) 101, a read only memory (ROM) 102, a random access memory (RAM) 103, a solid state drive (SSD) 104, a network controller 105, and an external memory controller 106. The CPU 101 controls entire operation of the electronic whiteboard 10. The ROM 102 stores programs such as an IPL to boot the CPU 101. The RAM 103 is used as a work area for the CPU 101. The SSD 104 stores various data such as a control program for the electronic whiteboard 10. The network controller 105 controls communication with an external device through the network 20. The external memory controller 106 controls communication with a USB memory 5.

The electronic whiteboard 10 further includes a capturing device 111, a graphics processing unit (GPU) 112, a display controller 113, a sensor controller 114, a contact sensor 115, and an electronic pen controller 116. The capturing device 111 causes a display of a laptop computer 6 to display a still image or a video image based on image data. The GPU 112 is dedicated to processing a graphical image. The display controller 113 controls display of an image processed at the GPU 112 for output through a display 3 or a videoconference terminal 7. The sensor controller 114 controls operation of the contact sensor 115. The contact sensor 115 detects a touch onto the display 3 with an electronic pen 4 or a user's hand H.

The contact sensor 115 senses a touch input to a specific coordinate on the display 3 using an infrared blocking system. More specifically, the display 3 is provided with two light receivers/emitters disposed on both upper side ends of the display 3, and a reflector frame surrounding the sides of the display 3. The light receivers/emitters emit a plurality of infrared rays in parallel to a surface of the display 3. Light receiving elements receive lights passing in the direction that is the same as an optical path of the emitted infrared rays, which are reflected by the reflector frame. The contact sensor 115 outputs an identifier (ID) of the infrared ray that is blocked by an object after being emitted from the two light receivers/emitters elements, to the sensor controller 114. Based on the ID of the infrared ray, the sensor controller 114 detects a specific coordinate that is touched by the object.

The contact sensor 115 is not limited to the infrared blocking system type, and may be a different type of detector, such as a capacitance touch panel that identifies the contact position by detecting a change in capacitance, a resistance film touch panel that identifies the contact position by detecting a change in voltage of two opposed resistance films, or an electromagnetic induction touch panel that identifies the contact position by detecting electromagnetic induction caused by contact of an object to a display.

The electronic pen controller 116 communicates with the electronic pen 4 to detect a touch by the tip or bottom of the pen to the display 3. In another example, the electronic pen controller 116 detects a touch by another part of the electronic pen 4, such as a part held by a hand of the user. The electronic whiteboard 10 further includes a bus line 120, such as an address bus or a data bus, which electrically connects the CPU 101, the ROM 102, the RAM 103, the SSD 104, the network controller 105, the external memory controller 106, the capturing device 111, the GPU 112, the sensor controller 114, and the electronic pen controller 116. The control program for the electronic whiteboard 10 may be stored on a computer-readable storage medium such as a compact disc read only memory (CD-ROM) for distribution.

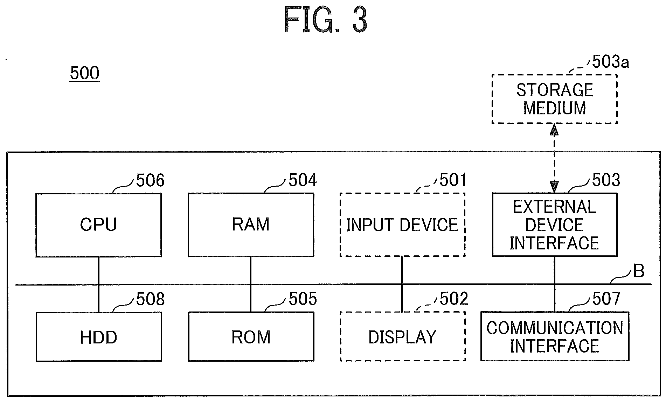

Each of the PC 12, the security patch providing apparatus 14, and the update file providing apparatus 16 of FIG. 1 is implemented by a computer 500 having a hardware configuration as illustrated in FIG. 3, for example. FIG. 3 is a block diagram illustrating an example of a hardware configuration of the computer 500.

As illustrated in FIG. 3, the computer 500 includes an input device 501, a display device 502, an external device interface 503, a RAM 504, a ROM 505, a CPU 506, a communication interface 507, and a hard disc drive (HDD) 508, which are connected to one another via a bus B. In another example, the input device 501 and the display device 502 are not necessarily constantly connected to the bus B. In other words, the input device 501 and the display device 502 could be connected to the bus B as necessary when used.

Examples of the input device 501 include a keyboard, a mouse, and a touch panel, enabling a user to input various operation instructions. Examples of the display device 502 include a display, on which results of processes by the computer 500 are displayed. The communication interface 507 is an interface device to connect the computer 500 to a network. The HDD 508 is an example of a nonvolatile storage device that stores programs or data.

The external device interface 503 is an interface that connects the computer 500 to an external device. The external device interface 503 enables the computer 500 to read or write data from or to a storage medium 503a, such as an SD memory card. The ROM 505 is an example of a nonvolatile semiconductor memory (storage device) in which programs and data are stored. The RAM 504 is an example of a volatile semiconductor memory (storage device) that temporarily stores programs or data.

The CPU 506 loads programs or data from a storage device such as the ROM 505 and the HDD 508 onto the RAM 504, and executes processes to implement entire control of the computer 500 or functions of the computer 500. The PC 12, the security patch providing apparatus 14, and the update file providing apparatus 16 of FIG. 1 implement various functions as described later with the hardware configuration of the computer 500 as illustrated in FIG. 3.

### Functional Configuration:

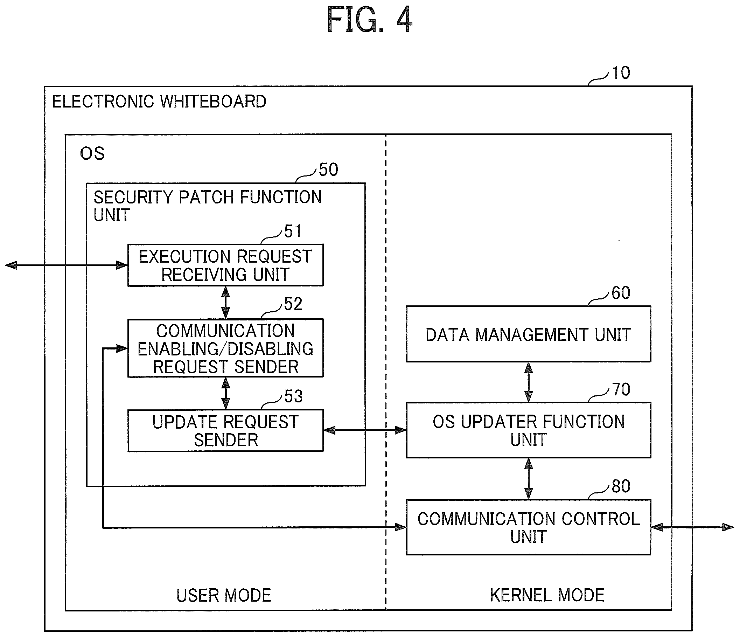

Hereinafter, a description is given of a functional configuration of the electronic whiteboard 10 according to the present embodiment. FIG. 4 is a block diagram illustrating an example of a functional configuration of the electronic whiteboard 10. The electronic whiteboard 10 of FIG. 4 includes a security patch function unit 50, a data management unit 60, an OS updater function unit 70, and a communication control unit 80. For example, Windows (registered trademark), which is an example of an OS, performs various processes by selectively using two operating modes, i.e., a kernel mode and a user mode. The kernel mode is a mode in which the OS itself operates. The user mode is a mode in which a program of a user operates. The security patch function unit 50 is implemented by an application that runs in the user mode. Each of the data management unit 60, the OS updater function unit 70, and the communication control unit 80 is implemented by a program that runs in the kernel mode.

The security patch function unit 50 is implemented by a security patch of the OS. For example, a security patch includes a batch file and an update file. The update file is an example of update data. An execution request receiving unit 51 of the security patch function unit 50 receives a request for execution of the security patch from a user.

In response to receiving the request for execution of the security patch, a shell program reads the batch file included in the security patch and successively executes commands described in the batch file, to implement a communication enabling/disabling request sender 52 and an update request sender 53. The communication enabling/disabling request sender 52 sends to the communication control unit 80 a request for enabling or disabling a communication function, according to the batch file included in the security patch. The update request sender 53 sends to the OS updater function unit 70 a request for updating an update target file with the update file included in the security patch, according to the batch file included in the security patch. The update target file is an example of an update target program, which is a program to be updated by the security patch.

In accordance with the update request from the update request sender 53, the OS updater function unit 70 starts an installation process of the update file. The OS updater function unit 70 is implemented by, for example, a program called an update service for the OS. During the installation process of the update file, the OS updater function unit 70 acquires from the data management unit 60 version information of a device driver that is already installed on the electronic whiteboard 10. The data management unit 60 manages version information of a device driver already installed on the electronic whiteboard 10.

Further, the OS updater function unit 70 performs a process of inquiring of the update file providing apparatus 16 about the latest version of the device driver already installed on the electronic whiteboard 10 via the communication control unit 80. For example, when an earlier version of the device driver is installed on the electronic whiteboard 10, the OS updater function unit 70 may display information indicating that the device driver is an earlier version on the display 3 to prompt a user to update the device driver. Furthermore, the OS updater function unit 70 performs a process of updating the update target file with the update file. In the present embodiment, a description is given on the assumption that the OS updater function unit 70 is not capable of executing a plurality of processes concurrently.

In the functional configuration of the electronic whiteboard 10 illustrated in FIG. 4, functional units or processes that are not relevant to the description of the present embodiment are omitted. In other words, the electronic whiteboard 10 may include any other functional units or processes in addition to those illustrated in FIG. 4. In addition, a description of a functional configuration of the PC 12 is also omitted, since the PC 12 has the same functional configuration as that of FIG. 4, when functional units or processes that are not relevant to the description of the present embodiment are omitted.

### Details of Operation

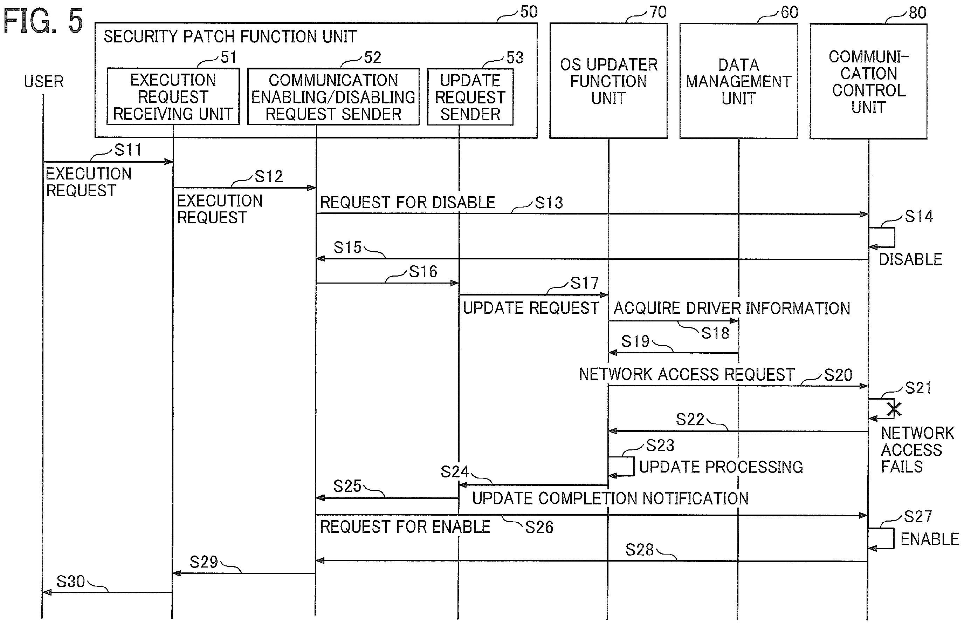

The information processing system 1 according to the present embodiment performs steps in an operation illustrated in FIG. 5, for example, to install a security patch. FIG. 5 is a sequence diagram illustrating an example of an operation of installing a security patch. In the present embodiment, a description is given hereinafter of an example in which a security patch of an OS is applied to the electronic whiteboard 10.

In step S11, a user requests execution of a security patch that is, for example, already downloaded from the security patch providing apparatus 14 to the electronic whiteboard 10, by, for example, double clicking an icon on a screen of the OS. The execution request receiving unit 51 of the security patch function unit 50 receives from the user the request for execution of the security patch.

In step S12, the execution request receiving unit 51 sends a request for execution of the security patch to the communication enabling/disabling request sender 52. In step S13, the communication enabling/disabling request sender 52 sends a request for disabling a communication function to the communication control unit 80. In step S14, the communication control unit 80 disables the communication function. A detailed description is given later of disabling the communication function. In step S15, the communication control unit 80 sends a notification indicating that the communication function has been disabled to the communication enabling/disabling request sender 52.

In step S16, the communication enabling/disabling request sender 52 sends a notification indicating that the communication function has been disabled to the update request sender 53. In step S17, in response to receiving the notification indicating that the communication function has been disabled, the update request sender 53 sends a request for updating with the update file included in the security patch to the OS updater function unit 70.

In step S18, the OS updater function unit 70 requests the data management unit 60 for version information of a device driver already installed on the electronic whiteboard 10. In step S19, the OS updater function unit 70 acquires the version information of the device driver already installed on the electronic whiteboard 10 from the data management unit 60.

In step S20, the OS updater function unit 70 requests the communication control unit 80 to access the update file providing apparatus 16 via the network 20 to inquire about the latest version of the device driver already installed on the electronic whiteboard 10. However, the communication control unit 80 always fails to access the update file providing apparatus 16 via the network 20 in step S21, since the communication function is disabled in step S14.

Thus, the electronic whiteboard 10 according to the present embodiment intentionally causes a failure in accessing the update file providing apparatus 16 via the network in step S21, thereby shortening a time until processes of step S22 and subsequent steps are started.

When an access to the update file providing apparatus 16 via the network 20 in step S21 is successful, the OS updater function unit 70 refrains from starting processes of step S22 and subsequent steps until acquisition of information on the latest version of the device driver already installed on the electronic whiteboard 10 is completed. A time until the completion of the process of step S21, which is performed when the access to the update file providing apparatus 16 via the network 20 is successful, varies depending on the state of the network 20, etc. There is a possibility that a time until the processes of step S22 and subsequent steps are started gets long.

In step S22, the communication control unit 80 transmits a notification indicating that the access to the update file providing apparatus 16 via the network 20 has failed to the OS updater function unit 70. The operation proceeds to step S23. In step S23, the OS updater function unit 70 interrupts the access to the update file providing apparatus 16 via the network 20, and performs an update process of updating the update target file with the update file included in the security patch. The access to the update file providing apparatus 16 via the network 20 is an example of a process using the network 20.

In step S24, the OS updater function unit 70 transmits a notification indicating the update completion to the update request sender 53 of the security patch function unit 50. In step S25, the update request sender 53 transmits a notification indicating the update completion to the communication enabling/disabling request sender 52.

In step S26, the communication enabling/disabling request sender 52 sends a request for enabling the communication function to the communication control unit 80. In step S27, the communication control unit 80 enables the communication function. A detailed description is given later of enabling the communication function. Thus, after the completion of the update process of step S23, the communication enabling/disabling request sender 52 resumes the communication function of the communication control unit 80. In step S28, the communication control unit 80 transmits a notification indicating that the communication function is enabled to the communication enabling/disabling request sender 52.

In step S29, the communication enabling/disabling request sender 52 transmits a notification indicating the completion of execution of the security patch to the execution request receiving unit 51. In step S30, the execution request receiving unit 51 displays information indicating the completion of execution of the security patch on the OS screen, for example, to notify the user of the completion.

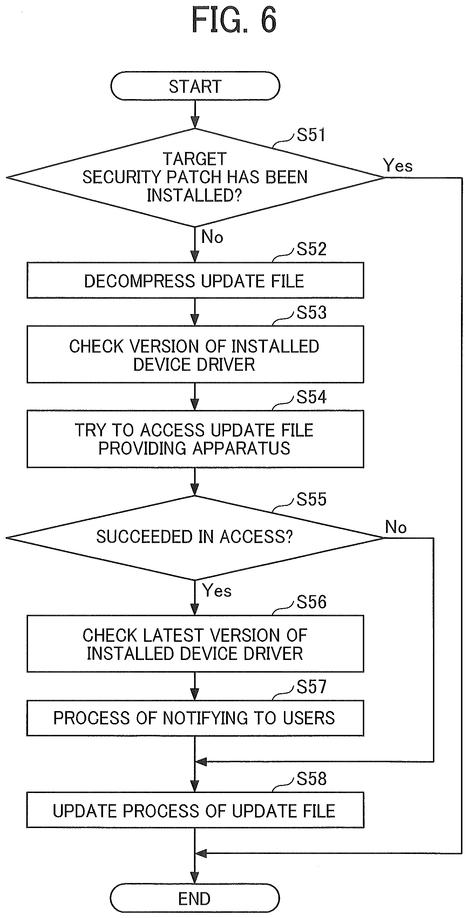

The OS updater function unit 70 performs an operation as illustrated in the flowchart of FIG. 6 to implement the processes in the sequence diagram of FIG. 5. FIG. 6 is a flowchart illustrating an example of an operation performed by the OS updater function unit 70. In step S51, the OS updater function unit 70 determines whether a security patch, which is a target of an update request with an update file is already installed on the electronic whiteboard 10. In one example, the OS updater function unit 70 manages information of an installed security patch and performs the determination of step S51 based on the information. In another example, the OS updater function unit 70 performs the determination of step S51 based on information of an installed security patch managed by the data management unit 60. When the OS updater function unit 70 determines that the target security patch is already installed on the electronic whiteboard 10 (S51: YES), the operation of FIG. 6 ends.

When the OS updater function unit 70 determines that the target security patch is not installed on the electronic whiteboard 10 (S51: NO), the operation proceeds to step S52. In step S52, the OS updater function unit 70 decompresses a compressed update file of the security patch.

In step S53, the OS updater function unit 70 acquires from the data management unit 60 version information of a device driver such as a graphics board or a chip set already installed on the electronic whiteboard 10 and identifies the version of the device driver, to check an environment in which the OS operates. In step S54, the OS updater function unit 70 tries to access the update file providing apparatus 16 in order to inquire about the latest version of the device driver already installed on the electronic whiteboard 10.

When the access to the update file providing apparatus 16 is successful (S55: YES), the operation proceeds to step S56. In step S56, the OS updater function unit 70 identifies the latest version of the installed device driver. More specifically, the OS updater function unit 70 determines whether the version of the installed device driver is the latest version. In step S57, the OS updater function unit 70 notifies the user of the determination result. Subsequently, in step S58, the OS updater function unit 70 performs an update process of updating an update target file with the update file.

By contrast, when the access to the update file providing apparatus 16 has failed (S55: NO), the OS updater function unit 70 skips the processes of steps S56 and S57. In step S58, the OS updater function unit 70 performs the update process of updating an update target file with the update file. As described heretofore, according to the operation illustrated in the flowchart of FIG. 6, a time required to perform the processes of steps S56 and S57 is saved by intentionally causing a failure in accessing to the update file providing apparatus 16. Accordingly, a time until the process of step S58 is started is shortened.

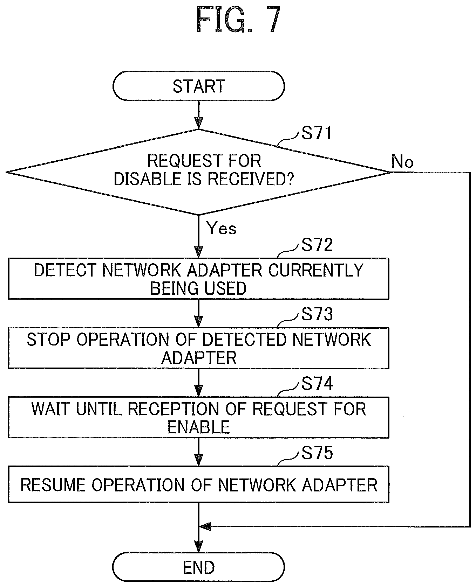

The communication control unit 80 performs an operation as illustrated in a flowchart of FIG. 7 to implement the processes in the sequence diagram of FIG. 5. FIG. 7 is a flowchart illustrating of an example of an operation performed by the communication control unit 80. When the communication control unit 80 receives, from the communication enabling/disabling request sender 52, a request for disabling the communication function (S71: YES), the operation proceeds to step S72.

In step S 72, the communication control unit 80 detects a network adapter used in the electronic whiteboard 10. In step S73, the communication control unit 80 suspends an operation of the network adapter detected in step S72. With the process of step S73, the communication function of the electronic whiteboard 10 is disabled.

For this reason, the OS updater function unit 70 fails to access to the update file providing apparatus 16 via the network 20 in step S20 of FIG. 5. In the operation of the flowchart illustrated in FIG. 7, the OS updater function unit 70 fails to access the update file providing apparatus 16 in step S20, also when the OS updater function unit 70 changes a port used for communication.

In step S74, the communication control unit 80 waits until receiving, from the communication enabling/disabling request sender 52, a request for enabling the communication function. In step S75, the communication control unit 80 resumes the operation of the network adapter. With the process of step S75, the communication function of the electronic whiteboard 10 is enabled.

As described heretofore, according to the operation illustrated in the flowchart of FIG. 7, the communication function of the communication control unit 80 is disabled from reception of the request for disabling the communication function from the security patch function unit 50 until reception of the request for enabling the communication function. The OS updater function unit 70 receives an update request for updating a target file with the update file included in the security patch, during a period of time when the communication function of the communication control unit 80 is disabled. Accordingly, a time until the update process is started is shortened, due to the failure in accessing the update file providing apparatus 16 via the network 20.

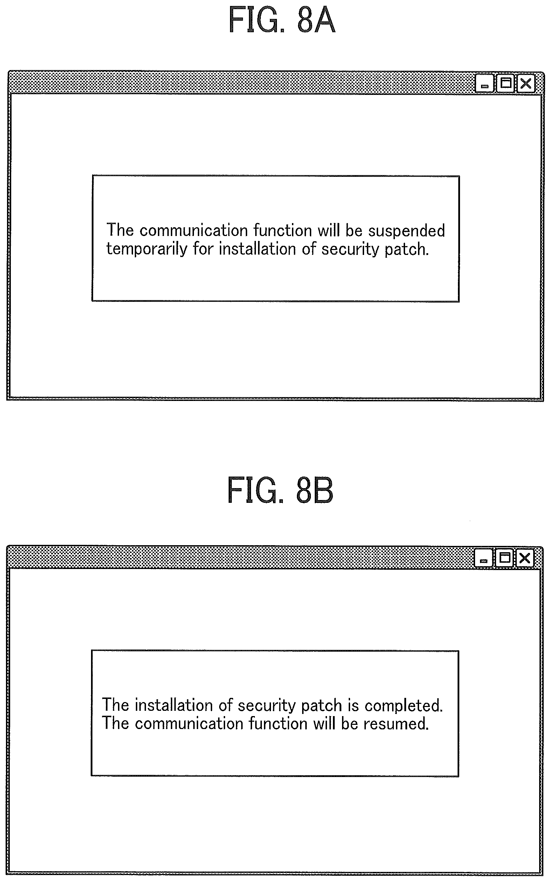

The electronic whiteboard 10 may display on the display 3 a screen notifying a user of the suspension and resumption of the communication function. FIG. 8A is an illustration of an example of a screen notifying a user of the suspension of the communication function. FIG. 8B is an illustration of an example of a screen notifying a user of the resumption of the communication function. For example, the communication enabling/disabling request sender 52 of the security patch function unit 50 displays, on the display 3, a screen displaying a message as illustrated in FIG. 8A after the process of step S15, to notify a user that the communication function is suspended for installation of the security patch. Further, the communication enabling/disabling request sender 52 of the security patch function unit 50 displays, on the display 3, a screen displaying a message as illustrated in FIG. 8B after the process of step S28, to notify a user that the communication function will be resumed since installation of the security patch is completed.

### Summary:

According to the present embodiment, an error is caused in an access from the electronic whiteboard 10 to the update file providing apparatus 16, which is performed after a user executes the security patch. This enables to shorten a time for updating an update target program with a security patch of an OS.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention. Any one of the above-described operations may be performed in various other ways, for example, in an order different from the one described above. Each of the functions of the described embodiments may be implemented by one or more processing circuits or circuitry. Processing circuitry includes a programmed processor, as a processor includes circuitry. A processing circuit also includes a device such as an application specific integrated circuit (ASIC), digital signal processor (DSP), field programmable gate array (FPGA), system on a chip (SOC), a graphics processing unit (GPU), and conventional circuit components arranged to perform the recited functions.

The communication control unit 80 is an example of "communication control means for controlling communication to a network" recited in the claims. The OS updater function unit 70 is an example of "update means for updating an update target program with update data" recited in the claims. The execution request receiving unit 51 is an example of "execution request receiving means for receiving, from a user, an execution request requesting execution of a process of updating the update target program with the update data" recited in the claims. The communication enabling/disabling request sender 52 is an example of "disablement requesting means for causing the communication control means to disable the communication to the network, in accordance with the execution request" and "enablement requesting means for causing the communication control means to enable the communication to the network after the process of updating the update target program with the update data by the update means is completed" recited in the claims. The update request sender 53 is an example of "update requesting means for requesting the update means to perform the process of updating the update target program with the update data" recited in the claims.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general-purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. A computer program product, comprising computer program code recorded on a computer readable medium, for causing an electronic whiteboard (10, 12) comprising communication control means (80) for controlling communication to a network (20), and update means (70) for updating an update target program with update data, to function as:
execution request receiving means (51) for receiving, from a user, an execution request requesting execution of a process of updating the update target program with the update data of a security patch;
disablement requesting means (52) for causing the communication control means (80) to disable the communication to the network (20), in accordance with the execution request, wherein the disablement requesting means (52) causes the communication control means (80) to disable the communication to the network (20), in order to cause a program called an update service of an operating system to fail in performing a process of checking whether there is the latest version of an update file via the network (20);
update requesting means (53) for requesting the update means (70) to perform the process of updating the update target program with the update data of the security patch, wherein
the communication control means (80) sends a notification indicating that the communication function has been disabled to the disablement requesting means (52), and the disablement requesting means (52) sends a notification indicating that the communication function has been disabled to the update requesting means (53),
in response to receiving the notification indicating that the communication function has been disabled, the update requesting means (53) sends a request for updating with the update data included in the security patch to the update means (70),
the update means (70) tries an access to the network (20) via the communication control means (80) to inquire about the latest version of the device driver already installed on the electronic whiteboard (10, 12), in response to receiving, from the update requesting means (53), a request for performing the process of the updating, and when the access is failed, the update means (70) starts the process of updating the update target program with the update data of the security patch; and
enablement requesting means (52) for causing the communication control means (80) to enable the communication to the network (20) after the process of updating the update target program with the update data of the security patch by the update means (70) is completed.

2. The computer program product of claim 1, wherein
when the access is successful, the update means (70) starts the process of updating the update target program with the update data of the security patch after completion of a process that is performed using the network (20).

3. The computer program product of claim 1 or 2, wherein
the program is an update module containing the update data.

4. An update method performed by an electronic whiteboard (10, 12) comprising communication control means (80) for controlling communication to a network (20), and update means (70) for updating an update target program with update data of a security patch, the method comprising:
receiving, by execution request receiving means (51), from a user, an execution request requesting execution of a process of updating the update target program with the update data of the security patch (S11);
causing, by disablement requesting means (52), the communication control means (80) to disable the communication to the network (20), in accordance with the execution request (S13), in order to cause a program called an update service of an operating system to fail in performing a process of checking whether there is the latest version of an update file via the network (20);
requesting the update means (70) to perform the process of updating the update target program with the update data of the security patch (S17), wherein
a notification indicating that the communication function has been disabled is sent by by the communication control means (80) to the disablement requesting means (52) (S15),
a notification indicating that the communication function has been disabled is sent by the disablement requesting means (52) to the update requesting means (53) (S16),
in response to receiving the notification indicating that the communication function has been disabled, by the update requesting means (53), a request for updating with the update data included in the security patch is sent to the update means (70) (S17),
an access to the network (20) via the communication control means (80) is tried, by the update means (70), to inquire about the latest version of the device driver already installed on the electronic whiteboard (10, 12) (S20), in response to receiving, from the update requesting means (53), a request for performing the process of the updating, and
when the access is failed, the process of updating the update target program with the update data of the security patch is started by the update means (70) (S23); and
causing the communication control means (80) to enable the communication to the network (20) after the process of updating the update target program with the update data of the security patch by the update means (70) is completed (S26).

5. An electronic whiteboard (10, 12), comprising:
communication control means (80) for controlling communication to a network (20);
update means (70) for updating an update target program with update data;
execution request receiving means (51) for receiving, from a user, an execution request requesting execution of a process of updating the update target program with the update data of a security patch;
disablement requesting means (52) for causing the communication control means (80) to disable the communication to the network (20), in accordance with the execution request, wherein the disablement requesting means (52) causes the communication control means (80) to disable the communication to the network (20), in order to cause a program called an update service of an operating system to fail in performing a process of checking whether there is the latest version of an update file via the network (20);
update requesting means (53) for requesting the update means (70) to perform the process of updating the update target program with the update data of the security patch, wherein
the communication control means (80) sends a notification indicating that the communication function has been disabled to the disablement requesting means (52), and the disablement requesting means (52) sends a notification indicating that the communication function has been disabled to the update requesting means (53),
in response to receiving the notification indicating that the communication function has been disabled, the update requesting means (53) sends a request for updating with the update data included in the security patch to the update means (70),
the update means (70) tries an access to the network (20) via the communication control means (80) to inquire about the latest version of the device driver already installed on the electronic whiteboard (10, 12), in response to receiving, from the update requesting means (53), a request for performing the process of the updating, and when the access is failed, the update means (70) starts the process of updating the update target program with the update data of the security patch; and
enablement requesting means (52) for causing the communication control means (80) to enable the communication to the network (20) after the process of updating the update target program with the update data of the security patch by the update means (70) is completed.

## Patentansprüche

1. Computerprogrammprodukt, das Computerprogrammcode umfasst, der auf einem computerlesbaren Medium aufgezeichnet ist, um zu bewirken, dass ein elektronisches Whiteboard (10, 12), das Kommunikationssteuermittel (80) zum Steuern einer Kommunikation mit einem Netz (20) und Aktualisierungsmittel (70) zum Aktualisieren eines Aktualisierungszielprogramms mit Aktualisierungsdaten umfasst, arbeitet als:
Ausführungsanforderungsempfangsmittel (51) zum Empfangen von einem Anwender einer Ausführungsanforderung, die die Ausführung eines Prozesses des Aktualisierens des Aktualisierungszielprogramms mit den Aktualisierungsdaten eines Sicherheits-Patch anfordert;
Deaktivierungsanforderungsmittel (52) zum Bewirken, dass die Kommunikationssteuermittel (80) die Kommunikation mit dem Netz (20) in Übereinstimmung mit der Ausführungsanforderung deaktivieren, wobei die Deaktivierungsanforderungsmittel (52) bewirken, dass die Kommunikationssteuermittel (80) die Kommunikation mit dem Netz (20) deaktivieren, um zu bewirken, dass ein Programm, das ein Aktualisierungsdienst eines Betriebssystem genannt wird, dabei scheitert, einen Prozess des Überprüfens, ob es eine neueste Version einer Aktualisierungsdatei gibt, über das Netz (20) auszuführen;
Aktualisierungsanforderungsmittel (53) zum Auffordern der Aktualisierungsmittel (70) den Prozess des Aktualisierens des Aktualisierungszielprogramms mit den Aktualisierungsdaten des Sicherheits-Patch auszuführen, wobei
die Kommunikationssteuermittel (80) eine Benachrichtigung, die angibt, dass die Kommunikationsfunktion deaktiviert wurden, an die Deaktivierungsanforderungsmittel (52) senden und die Deaktivierungsanforderungsmittel (52) eine Benachrichtigung, die angibt, dass die Kommunikationsfunktion deaktiviert wurde, an die Aktualisierungsanforderungsmittel (53) senden,
wobei die Aktualisierungsanforderungsmittel (53) als Reaktion auf das Empfangen der Benachrichtigung, die angibt, dass die Kommunikationsfunktion deaktiviert wurde, eine Anforderung zum Aktualisieren mit den Aktualisierungsdaten, die in dem Sicherheits-Patch enthalten sind, an die Aktualisierungsmittel (70) sendet,
die Aktualisierungsmittel (70) als Reaktion auf das Empfangen einer Anforderung zum Ausführen des Prozesses des Aktualisierens von den Aktualisierungsanforderungsmitteln (53) über die Kommunikationssteuermittel (80) einen Zugriff auf das Netz (20) versuchen, um sich nach der neuesten Version des Vorrichtungstreibers, der bereits auf dem elektronischen Whiteboard (10, 12) installiert ist, zu erkundigen, und dann, wenn der Zugriff scheitert, die Aktualisierungsmittel (70) den Prozess des Aktualisierens des Aktualisierungszielprogramms mit den Aktualisierungsdaten des Sicherheits-Patch starten; und
Aktivierungsanforderungsmittel (52) zum Bewirken, dass die Kommunikationssteuermittel (80) die Kommunikation mit dem Netz (20) aktivieren, nachdem der Prozess des Aktualisierens des Aktualisierungszielprogramms mit den Aktualisierungsdaten des Sicherheits-Patch durch die Aktualisierungsmittel (70) abgeschlossen ist.

2. Computerprogrammprodukt nach Anspruch 1, wobei
dann, wenn der Zugriff erfolgreich ist, die Aktualisierungsmittel (70) den Prozess des Aktualisierens des Aktualisierungszielprogramms mit den Aktualisierungsdaten des Sicherheits-Patch nach dem Abschluss eines Prozesses, der unter Verwendung des Netzes (20) ausgeführt wird, starten.

3. Computerprogrammprodukt nach Anspruch 1 oder 2, wobei
das Programm ein Aktualisierungsmodul ist, das die Aktualisierungsdaten enthält.

4. Aktualisierungsverfahren, das durch ein elektronisches Whiteboard (10, 12) ausgeführt wird, das Kommunikationssteuermittel (80) zum Steuern einer Kommunikation mit einem Netz (20) und Aktualisierungsmittel (70) zum Aktualisieren eines Aktualisierungszielprogramms mit Aktualisierungsdaten eines Sicherheits-Patch umfasst, wobei das Verfahren Folgendes umfasst:
Empfangen durch Ausführungsanforderungsempfangsmittel (51) von einem Anwender einer Ausführungsanforderung, die die Ausführung eines Prozesses des Aktualisierens des Aktualisierungszielprogramms mit den Aktualisierungsdaten des Sicherheits-Patch anfordert (S11);
Bewirken durch Deaktivierungsanforderungsmittel (52), dass die Kommunikationssteuermittel (80) die Kommunikation mit dem Netz (20) in Übereinstimmung mit der Ausführungsanforderung deaktivieren (S13), um zu bewirken, dass ein Programm, das ein Aktualisierungsdienst eines Betriebssystem genannt wird, dabei scheitert, einen Prozess des Überprüfens, ob es eine neueste Version einer Aktualisierungsdatei gibt, über das Netz (20) auszuführen;
Auffordern der Aktualisierungsmittel (70), den Prozess des Aktualisierens des Aktualisierungszielprogramms mit den Aktualisierungsdaten des Sicherheits-Patch auszuführen (S17), wobei
eine Benachrichtigung, die angibt, dass die Kommunikationsfunktion deaktiviert wurde, durch die Kommunikationssteuermittel (80) an die Deaktivierungsanforderungsmittel (52) gesendet wird (S15),
eine Benachrichtigung, die angibt, dass die Kommunikationsfunktion deaktiviert wurde, durch die Deaktivierungsanforderungsmittel (52) an die Aktualisierungsanforderungsmittel (53) gesendet wird (S16),
als Reaktion auf das Empfangen der Benachrichtigung, die angibt, dass die Kommunikationsfunktion deaktiviert wurde, durch die Aktualisierungsanforderungsmittel (53) eine Anforderung zum Aktualisieren mit den Aktualisierungsdaten, die in dem Sicherheits-Patch enthalten sind, an die Aktualisierungsmittel (70) gesendet wird (S17),
als Reaktion auf das Empfangen einer Anforderung zum Ausführen des Prozesses des Aktualisierens von den Aktualisierungsanforderungsmitteln (53) ein Zugriff auf das Netz (20) über die Kommunikationssteuermittel (80) durch die Aktualisierungsmittel (70) versucht wird, um sich nach der neuesten Version des Vorrichtungstreibers, der bereits auf dem elektronischen Whiteboard (10, 12) installiert ist (S20), zu erkundigen, und
dann, wenn der Zugriff scheitert, der Prozess des Aktualisierens des Aktualisierungszielprogramms mit den Aktualisierungsdaten des Sicherheits-Patch durch die Aktualisierungsmittel (70) gestartet wird (S23); und
Bewirken, dass die Kommunikationssteuermittel (80) die Kommunikation mit dem Netz (20) aktivieren, nachdem der Prozess des Aktualisierens des Aktualisierungszielprogramms mit den Aktualisierungsdaten des Sicherheits-Patch durch die Aktualisierungsmittel (70) abgeschlossen ist (S26).

5. Elektronisches Whiteboard (10, 12), das Folgendes umfasst:
Kommunikationssteuermittel (80) zum Steuern einer Kommunikation mit einem Netz (20);
Aktualisierungsmittel (70) zum Aktualisieren eines Aktualisierungszielprogramms mit Aktualisierungsdaten;
Ausführungsanforderungsempfangsmittel (51) zum Empfangen von einem Anwender einer Ausführungsanforderung, die die Ausführung eines Prozesses des Aktualisierens des Aktualisierungszielprogramms mit den Aktualisierungsdaten eines Sicherheits-Patch anfordert;
Deaktivierungsanforderungsmittel (52) zum Bewirken, dass die Kommunikationssteuermittel (80) die Kommunikation mit dem Netz (20) in Übereinstimmung mit der Ausführungsanforderung deaktivieren, wobei die Deaktivierungsanforderungsmittel (52) bewirken, dass die Kommunikationssteuermittel (80) die Kommunikation mit dem Netz (20) deaktivieren, um zu bewirken, dass ein Programm, das ein Aktualisierungsdienst eines Betriebssystem genannt wird, scheitert, einen Prozess des Überprüfens, ob es eine neueste Version einer Aktualisierungsdatei gibt, über das Netz (20) auszuführen;
Aktualisierungsanforderungsmittel (53) zum Auffordern der Aktualisierungsmittel (70), den Prozess des Aktualisierens des Aktualisierungszielprogramms mit den Aktualisierungsdaten des Sicherheits-Patch auszuführen, wobei
die Kommunikationssteuermittel (80) eine Benachrichtigung, die angibt, dass die Kommunikationsfunktion deaktiviert wurde, an die Deaktivierungsanforderungsmittel (52) senden und die Deaktivierungsanforderungsmittel (52) eine Benachrichtigung, die angibt, dass die Kommunikationsfunktion deaktiviert wurde, an die Aktualisierungsanforderungsmittel (53) senden,
wobei die Aktualisierungsanforderungsmittel (53) als Reaktion auf das Empfangen der Benachrichtigung, die angibt, dass die Kommunikationsfunktion deaktiviert wurde, eine Anforderung zum Aktualisieren mit den Aktualisierungsdaten, die in dem Sicherheits-Patch enthalten sind, an die Aktualisierungsmittel (70) senden,
die Aktualisierungsmittel (70) als Reaktion auf das Empfangen einer Anforderung zum Ausführen des Prozesses des Aktualisierens von den Aktualisierungsanforderungsmitteln (53) einen Zugriff auf das Netz (20) über die Kommunikationssteuermittel (80) versuchen, um sich nach der neuesten Version des Vorrichtungstreibers, der bereits auf dem elektronischen Whiteboard (10, 12) installiert ist, zu erkundigen, und dann, wenn der Zugriff scheitert, die Aktualisierungsmittel (70) den Prozess des Aktualisierens des Aktualisierungszielprogramms mit den Aktualisierungsdaten des Sicherheits-Patch starten; und
Aktivierungsanforderungsmittel (52) zum Bewirken, dass die Kommunikationssteuermittel (80) die Kommunikation mit dem Netz (20) aktivieren, nachdem der Prozess des Aktualisierens des Aktualisierungszielprogramms mit den Aktualisierungsdaten des Sicherheits-Patch durch die Aktualisierungsmittel (70) abgeschlossen ist.

## Revendications

1. Produit programme d'ordinateur, comprenant un code de programme d'ordinateur enregistré sur un support lisible par ordinateur, pour obliger un tableau blanc électronique (10, 12) comprenant un moyen de commande de communication (80) pour commander la communication à un réseau (20), et un moyen de mise à jour (70) pour mettre à jour un programme cible de mise à jour avec des données de mise à jour, de servir de :
moyen de réception de demande d'exécution (51) pour recevoir, à partir d'un utilisateur, une demande d'exécution demandant l'exécution d'un traitement de mise à jour du programme cible de mise à jour avec les données de mise à jour d'un correctif de sécurité ;
moyen de demande de désactivation (52) pour obliger le moyen de commande de communication (80) de désactiver la communication au réseau (20), conformément à la demande d'exécution, dans lequel le moyen de demande de désactivation (52) oblige le moyen de commande de communication (80) de désactiver la communication au réseau (20), afin d'obliger un programme, appelé service de mise à jour d'un système d'exploitation, de ne pas pouvoir réaliser un traitement de vérification, du fait que la toute dernière version d'un fichier de mise à jour est présente ou non, par l'intermédiaire du réseau (20) ;
moyen de demande de mise à jour (53) pour demander au moyen de mise à jour (70) de réaliser le traitement de mise à jour du programme cible de mise à jour avec les données de mise à jour du correctif de sécurité, dans lequel
le moyen de commande de communication (80) envoie une notification, indiquant que la fonction de communication a été désactivée, au moyen de demande de désactivation (52), et le moyen de demande de désactivation (52) envoie une notification, indiquant que la fonction de communication a été désactivée, au moyen de demande de mise à jour (53),
en réponse à la réception de la notification, indiquant que la fonction de communication a été désactivée, le moyen de demande de mise à jour (53) envoie une demande, pour effectuer une mise jour avec les données de mise à jour incluses dans le correctif de sécurité, au moyen de mise à jour (70),
le moyen de mise à jour (70) tente un accès au réseau (20), par l'intermédiaire du moyen de commande de communication (80), pour effectuer une interrogation en ce qui concerne la toute dernière version du pilote de dispositif déjà installé sur le tableau blanc électronique (10, 12), en réponse à la réception, à partir du moyen de demande de mise à jour (53), d'une demande pour réaliser le traitement de la mise à jour, et, lorsque l'accès est un échec, le moyen de mise à jour (70) commence le traitement de mise à jour du programme cible de mise à jour avec les données de mise à jour du correctif de sécurité ; et
moyen de demande d'activation (52) pour obliger le moyen de commande de communication (80) d'activer la communication au réseau (20) après que le traitement de mise à jour du programme cible de mise à jour avec les données de mise à jour du correctif de sécurité par le moyen de mise à jour (70) est achevé.

2. Produit programme d'ordinateur selon la revendication 1, dans lequel lorsque l'accès est réussi, le moyen de mise à jour (70) commence le traitement de mise à jour du programme cible de mise à jour avec les données de mise à jour du correctif de sécurité après l'achèvement d'un traitement qui est réalisé en utilisant le réseau (20).

3. Produit programme d'ordinateur selon la revendication 1 ou 2, dans lequel le programme est un module de mise à jour contenant les données de mise à jour.

4. Procédé de mise à jour réalisé par un tableau blanc électronique (10, 12) comprenant un moyen de commande de communication (80) pour commander la communication à un réseau (20), et un moyen de mise à jour (70) pour mettre à jour un programme cible de mise à jour avec des données de mise à jour d'un correctif de sécurité, le procédé comprenant :
la réception, par un moyen de réception de demande d'exécution (51), à partir d'un utilisateur, d'une demande d'exécution demandant l'exécution d'un traitement de mise à jour du programme cible de mise à jour avec les données de mise à jour du correctif de sécurité (S11) ;
l'obligation, par un moyen de demande de désactivation (52), du moyen de commande de communication (80) de désactiver la communication au réseau (20), conformément à la demande d'exécution (S13), afin d'obliger un programme, appelé service de mise à jour d'un système d'exploitation, de ne pas pouvoir réaliser un traitement de vérification, du fait que la toute dernière version d'un fichier de mise à jour est présente ou non, par l'intermédiaire du réseau (20) ;
la demande, au moyen de mise à jour (70), de réaliser le traitement de mise à jour du programme cible de mise à jour avec les données de mise à jour du correctif de sécurité (S17), dans lequel
une notification, indiquant que la fonction de communication a été désactivée, est envoyée, par le moyen de commande de communication (80), au moyen de demande de désactivation (52) (S15),
une notification, indiquant que la fonction de communication a été désactivée, est envoyée, par le moyen de demande de désactivation (52), au moyen de demande de mise à jour (53) (S16),
en réponse à la réception de la notification, indiquant que la fonction de communication a été désactivée, par le moyen de demande de mise à jour (53), une demande, pour effectuer une mise jour avec les données de mise à jour incluses dans le correctif de sécurité, est envoyée au moyen de mise à jour (70) (S17),
un accès au réseau (20), par l'intermédiaire du moyen de commande de communication (80), est tenté, par le moyen de mise à jour (70), pour effectuer une interrogation en ce qui concerne la toute dernière version du pilote de dispositif déjà installé sur le tableau blanc électronique (10, 12) (S20), en réponse à la réception, à partir du moyen de demande de mise à jour (53), d'une demande pour réaliser le traitement de la mise à jour, et
lorsque l'accès est un échec, le traitement de mise à jour du programme cible de mise à jour avec les données de mise à jour du correctif de sécurité est commencé par le moyen de mise à jour (70) (S23) ; et
l'obligation du moyen de commande de communication (80) d'activer la communication au réseau (20) après que le traitement de mise à jour du programme cible de mise à jour avec les données de mise à jour du correctif de sécurité par le moyen de mise à jour (70) est achevé (S26).

5. Tableau blanc électronique (10, 12), comprenant :
un moyen de commande de communication (80) pour commander la communication à un réseau (20) ;
un moyen de mise à jour (70) pour mettre à jour un programme cible de mise à jour avec des données de mise à jour ;
un moyen de réception de demande d'exécution (51) pour recevoir, à partir d'un utilisateur, une demande d'exécution demandant l'exécution d'un traitement de mise à jour du programme cible de mise à jour avec les données de mise à jour d'un correctif de sécurité ;
un moyen de demande de désactivation (52) pour obliger le moyen de commande de communication (80) de désactiver la communication au réseau (20), conformément à la demande d'exécution, dans lequel le moyen de demande de désactivation (52) oblige le moyen de commande de communication (80) de désactiver la communication au réseau (20), afin d'obliger un programme, appelé service de mise à jour d'un système d'exploitation, de ne pas pouvoir réaliser un traitement de vérification, du fait que la toute dernière version d'un fichier de mise à jour est présente ou non, par l'intermédiaire du réseau (20) ;
un moyen de demande de mise à jour (53) pour demander au moyen de mise à jour (70) de réaliser le traitement de mise à jour du programme cible de mise à jour avec les données de mise à jour du correctif de sécurité, dans lequel
le moyen de commande de communication (80) envoie une notification, indiquant que la fonction de communication a été désactivée, au moyen de demande de désactivation (52), et le moyen de demande de désactivation (52) envoie une notification, indiquant que la fonction de communication a été désactivée, au moyen de demande de mise à jour (53),
en réponse à la réception de la notification, indiquant que la fonction de communication a été désactivée, le moyen de demande de mise à jour (53) envoie une demande, pour effectuer une mise jour avec les données de mise à jour incluses dans le correctif de sécurité, au moyen de mise à jour (70),
le moyen de mise à jour (70) tente un accès au réseau (20) par l'intermédiaire du moyen de commande de communication (80) pour effectuer une interrogation en ce qui concerne la toute dernière version du pilote de dispositif déjà installé sur le tableau blanc électronique (10, 12), en réponse à la réception, à partir du moyen de demande de mise à jour (53), d'une demande pour réaliser le traitement de la mise à jour, et, lorsque l'accès est un échec, le moyen de mise à jour (70) commence le traitement de mise à jour du programme cible de mise à jour avec les données de mise à jour du correctif de sécurité ; et
un moyen de demande d'activation (52) pour obliger le moyen de commande de communication (80) d'activer la communication au réseau (20) après que le traitement de mise à jour du programme cible de mise à jour avec les données de mise à jour du correctif de sécurité par le moyen de mise à jour (70) est achevé.
